# EUROPEAN PATENT APPLICATION

(11) **EP 4 662 994 A1**
(43) Date of publication of application: **17.12.2025**
(21) Application number: 25181888.6
(22) Date of filing: 10.06.2025
(51) Int. Cl.: A01B 69/00, A01B 69/04

(54) **SMART IMPLEMENT GUIDANCE**

(30) Priority: 12.06.2024 US 202418741417
(71) Applicant: CNH Industrial America LLC, New Holland, PA 17557 (US)
(72) Inventor: Singh, Aditya, New Holland, 17557 (US)
(74) Representative: CNH Industrial IP Department

(57) **Abstract**

A system may receive, by a controller onboard a work vehicle that is positionally coupled to the implement, a location data associated with a ground position of the implement; determine, the ground position of the implement based at least on the location data associated with the ground position of the implement; determine a ground position of the work vehicle relative to the implement based at least on the received location data associated with the ground position of the implement; determine a deviation of the ground position of the implement from a desired course based on the ground position of the implement exceeding a threshold; responsive to determining that the deviation of the ground position of the implement from the desired course exceeds the threshold, adjusting one or more operating parameters of the work vehicle to adjust the ground position of the work vehicle relative to the implement.

## Description

### BACKGROUND

The present disclosure relates generally to towed work implements. More specifically, the present disclosure relates to passive implement guidance during operation.

### SUMMARY

In some aspects, the techniques described herein relate to a method of maintaining positionally accurate implement operation of an implement, the method including: receiving, by a controller onboard a work vehicle that is positionally coupled to the implement, a location data associated with a ground position of the implement; determining, by the controller, the ground position of the implement based at least on the location data associated with the ground position of the implement; determining, by the controller, a ground position of the work vehicle relative to the implement based at least on the received location data associated with the ground position of the implement; determining, by the controller, a deviation of the ground position of the implement from a desired course based on the ground position of the implement exceeding a threshold; and responsive to determining that the deviation of the ground position of the implement from the desired course exceeds the threshold, adjusting, by the controller, one or more operating parameters of the work vehicle to adjust the ground position of the work vehicle relative to the implement.

In some aspects, the techniques described herein relate to a method, wherein the ground position of the work vehicle is further determined, by the controller, based on a characteristic of a positional coupling between the work vehicle and the implement, wherein the characteristic of the positional coupling includes at least one of a type of a coupling device, a length of the coupling device, a flexibility parameter of the coupling device, a wheelbase of the implement, a coupling position of the coupling device on the implement, a coupling position of the coupling device on the work vehicle, a difference in height between the work vehicle and the implement, and a suspension parameter.

In some aspects, the techniques described herein relate to a method, further including: receiving, by the controller, from an optical sensor positionally coupled to the implement, image data of the work vehicle; and determining, by the controller, the ground position of the work vehicle based on the received location data associated with the ground position of the implement and the received image data of the work vehicle.

In some aspects, the techniques described herein relate to a method, further including: receiving, by the controller, from an optical sensor positionally coupled to the work vehicle, image data of the implement; and determining, by the controller, the ground position of the work vehicle based on the received location data associated with the ground position of the implement and the received image data of the implement.

In some aspects, the techniques described herein relate to a method, further including: receiving, by the controller, from a position sensor, positional data of a coupling device physically coupled to the work vehicle at a first portion of the coupling device and physically coupled to the implement at a second portion of the coupling device; and determining, by the controller, the ground position of the work vehicle based on the received location data associated with the ground position of the implement and the received positional data of the coupling device.

In some aspects, the techniques described herein relate to a method, wherein adjustment of the one or more operating parameters is based in part on a weight distribution of the work vehicle and the implement, a wind speed, a terrain grade, a terrain type, an implement type, an amount of deviation of the implement from the desired course, a steering geometry of the work vehicle, a steering geometry of the implement, a speed of the work vehicle, a time of operation, crop characteristics, and one or more suspension characteristics of the implement and the work vehicle.

In some aspects, the techniques described herein relate to a method, further including: continuously updating, by the controller, the ground position of the implement as additional location data of the implement is received; continuously updating, by the controller, the ground position of the work vehicle relative to the implement based on the additional location data of the implement; determining, by the controller, the deviation of the implement from the desired course based on the updated ground position of the implement; and dynamically adjusting, by the controller, the one or more operating parameters of the work vehicle until the deviation of the ground position of the implement is within the threshold.

In some aspects, the techniques described herein relate to a method, wherein the location data is Global Navigation Satellite System ("GNSS") location data and is received from a GNSS receiver positionally coupled to the implement.

In some aspects, the techniques described herein relate to a method, further including: storing, by the controller, in a memory communicatively coupled to the controller, a history of the location data of the implement and corresponding adjustments made to the one or more operating parameters of the work vehicle; accessing, by the controller, the history of the location data; predicting, by the controller, future adjustments to the one or more operating parameters based on new location data received; and responsive to predicting a future adjustment to the one or more operating parameters based on the new location data received, adjusting, by the controller, the one or more operating parameters based on the predicted future adjustment.

In some aspects, the techniques described herein relate to a method, wherein the implement is towed by the work vehicle during operation.

In some aspects, the techniques described herein relate to a method, wherein the work vehicle is physically coupled to the implement during operation.

In some aspects, the techniques described herein relate to a method, wherein the work vehicle is communicatively coupled to the implement during operation.

In some aspects, the techniques described herein relate to a method, wherein the one or more operating parameters include at least one of steering angle, an engine speed, a transmission gear selection, a hydraulic pressure or flow rate, a traction control, a work mode, a brake force, clutch engagement, implement height, and implement lateral adjustment.

In some aspects, the techniques described herein relate to a method, wherein the one or more operating parameters of the work vehicle include one or more operating parameters of the implement, including at least one of an implement steering angle, an implement height, an implement engagement depth, and an implement lateral adjustment.

In some aspects, the techniques described herein relate to a method, wherein the implement is at least one of plow, harrow, seeder, planter, cultivator, sprayer, fertilizer spreader, combine harvester, mower, brush hog, hay baler, rotary tiller, grain drill, irrigation applicator, grain cart, disc mower, manure spreader, forage harvester, potato harvester, cotton picker, vegetable transplanter, and strip tiller.

In some aspects, the techniques described herein relate to a system including, a work vehicle; an implement; a positional receiver; and a controller, the controller including one or more processors including one or more memory devices coupled to the one or more processors, the one or more memory devices configured to store instructions thereon that, when executed by the one or more processors, cause the one or more processors to: receive location data associated with a ground position of the implement; determine the ground position of the implement based at least on the location data associated with the ground position of the implement; determine a ground position of the work vehicle relative to the implement based on the received location data and a characteristic of a positional coupling between the work vehicle and the implement; determine a deviation of the ground position of the implement from a desired course based on the location data of the implement exceeds a threshold; and responsive to determining that the deviation of the ground position of the implement from the desired course exceeds the threshold, adjusting one or more operating parameters of the work vehicle to adjust the ground position of the work vehicle relative to the implement.

In some aspects, the techniques described herein relate to a system, wherein the one or more memory devices are configured to store further instructions thereon that, when executed by the one or more processors, cause the one or more processors to: receive from an optical sensor positionally coupled to the implement, image data of the work vehicle; and determine the ground position of the work vehicle based on the received location data associated with the ground position of the implement and the received image data of the work vehicle.

In some aspects, the techniques described herein relate to a system, wherein the one or more memory devices are configured to store further instructions thereon that, when executed by the one or more processors, cause the one or more processors to: receive from an optical sensor positionally coupled to the work vehicle, image data of the implement; and determine the ground position of the work vehicle based on the received location data associated with the ground position of the implement and the received image data of the implement.

In some aspects, the techniques described herein relate to a work vehicle including, a frame; a front tractive assembly coupled to the frame, the front tractive assembly including a front axle; a rear tractive assembly coupled to the frame, the rear tractive assembly including a rear axle; a prime mover coupled to the frame and configured to drive one or more of the front tractive assembly and the rear tractive assembly to propel the vehicle; and a controller, the controller including one or more processors including one or more memory devices coupled to the one or more processors, the one or more memory devices configured to store instructions thereon that, when executed by the one or more processors, cause the one or more processors to: receive location data associated with a ground position of an implement positionally coupled to the work vehicle; determine the ground position of the implement based at least on the location data associated with the ground position of the implement; determine a ground position of the work vehicle relative to the implement based on the received location data and a characteristic of a positional coupling between the work vehicle and the implement; determine a deviation of the ground position of the implement from a desired course based on the location data of the implement exceeds a threshold; and responsive to determining that the deviation of the ground position of the implement from the desired course exceeds the threshold, adjusting one or more operating parameters of the work vehicle to adjust the ground position of the work vehicle relative to the implement.

In some aspects, the techniques described herein relate to a work vehicle, wherein the one or more memory devices are configured to store further instructions thereon that, when executed by the one or more processors, cause the one or more processors to: receive from an optical sensor positionally coupled to the work vehicle, image data of the implement; and determine the ground position of the work vehicle based on the received location data associated with the ground position of the implement and the received image data of the implement.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE DRAWINGS

FIG. 1 is a perspective view of a vehicle, according to an exemplary embodiment.
FIG. 2 is a schematic block diagram of the vehicle of FIG. 1, according to an exemplary embodiment.
FIG. 3 is a schematic block diagram of a driveline of the vehicle of FIG. 1, according to an exemplary embodiment.
FIG. 4 is a block diagram of a passive implement guidance system, according to an exemplary embodiment.
FIG. 5 is a schematic block diagram of a passive implement guidance system, according to an exemplary embodiment.
FIG. 6 is a top view of a vehicle and towed implement, according to an exemplary embodiment.
FIG. 7 is a back view of a vehicle towing a laterally shifted implement, according to an exemplary embodiment.
FIG. 8 is a top view of a vehicle towing a laterally shifted implement, according to an exemplary embodiment.
FIG. 9 is a flowchart of a computer-implemented method for passive implement guidance, according to an exemplary embodiment.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Passive guidance systems are used by agricultural workers to maintain a towed implement's trajectory across diverse terrain and to counter implement drag and drift. Traditionally, passive guidance systems involve employing two distinct Global Navigational Satellite Systems ("GNSS") solutions: one positioned on the towed implement itself, and the other on a work vehicle towing the implement. However, the cost of outfitting the machine with two GNSS units can be prohibitively expensive and complicated.

According to an exemplary embodiment, a method of the present disclosure provides for a passive implement guidance system using a single location sensor unit (e.g., location sensor or location receiver). In at least one embodiment, the location sensor is a Global Navigation Satellite System ("GNSS") unit. The location sensor may be configured to capture real-world ground location data corresponding to the location of the location sensor and/or the location-sensor-equipped implement. By way of a non-limiting example, the location sensor unit may be positioned on an implement (e.g., a towed implement) and calibrated to measure a current ground position of the implement. A vehicle towing the implement is not equipped with a location sensor. While not equipped with a functioning location sensor, the vehicle may be equipped with one or more position sensors for capturing data associated with the relative position of the vehicle in relation to the implement. Such position sensors may include, for example, an optical sensor for capturing image data, a hitch sensor for capturing data corresponding to a movement/position of a hitch (and components coupled to the hitch) of the vehicle or implement, and load cell sensor for capturing forces applied to the hitch by the implement.

A controller executing one more computer-readable instructions may receive captured data from one or more sensors and may be equipped to the vehicle and communicatively coupled to the location sensor to receive the captured location data. The controller may also be configured to receive position data captured being transmitted by the position sensor. The controller may execute one or more protocols to estimate a relative position of the vehicle with respect to the implement, based at least in part on the received position data from the position sensor. Responsive to estimating (e.g., determining) the relative position of the vehicle with respect to the implement, the controller may determine the real-world ground position of the vehicle, based at least in part on the received location data of the implement and the determined relative position of the vehicle in relation to the implement. The controller may then generate various vehicle guidance trajectories (e.g., paths) for the vehicle to compensate for drift or drag of the implement, thereby maintaining positional accuracy of the implement along a desired course.

### Overall Vehicle

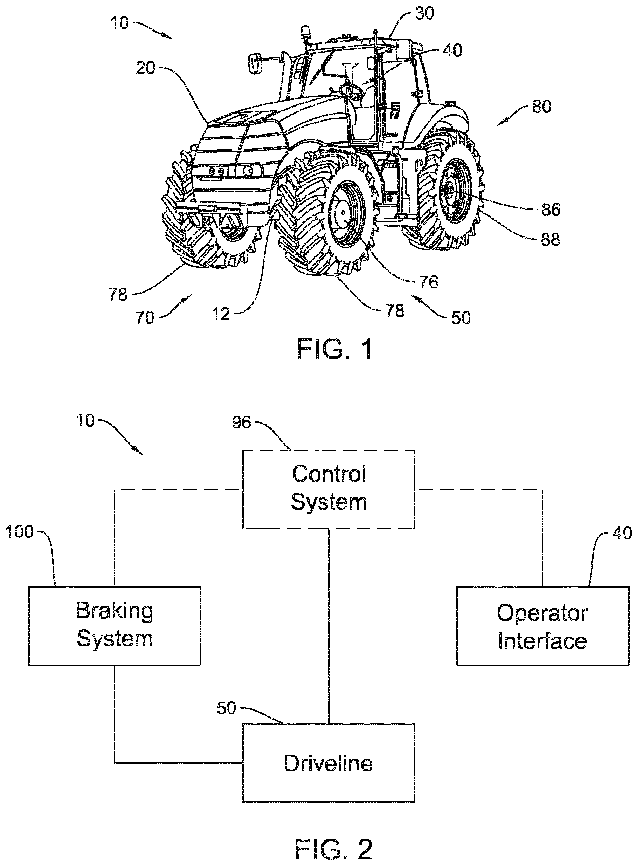

According to the exemplary embodiment shown in FIGS. 1-3, a machine or vehicle (e.g., a work machine or work vehicle), shown as vehicle 10, includes a chassis, shown as frame 12; a body assembly, shown as body 20, coupled to the frame 12 and having an occupant portion or section, shown as cab 30; operator input and output devices, shown as operator interface 40, that are disposed within the cab 30; a drivetrain, shown as driveline 50, coupled to the frame 12 and at least partially disposed under the body 20; a vehicle braking system, shown as braking system 100, coupled to one or more components of the driveline 50 to facilitate selectively braking the one or more components of the driveline 50; and a vehicle control system, shown as control system 96, coupled to the operator interface 40, the driveline 50, and the braking system 100. In other embodiments, the vehicle 10 includes more or fewer components.

The chassis of the vehicle 10 may include a structural frame (e.g., the frame 12) formed from one or more frame members coupled to one another (e.g., as a weldment). Additionally or alternatively, the chassis may include a portion of the driveline 50. By way of example, a component of the driveline 50 (e.g., the transmission 52) may include a housing of sufficient thickness to provide the component with strength to support other components of the vehicle 10.

According to an exemplary embodiment, the vehicle 10 is an off-road machine or vehicle. In some embodiments, the off-road machine or vehicle is an agricultural machine or vehicle such as a tractor, a telehandler, a front loader, a combine harvester, a grape harvester, a forage harvester, a sprayer vehicle, a speedrower, and/or another type of agricultural machine or vehicle. In some embodiments, the off-road machine or vehicle is a construction machine or vehicle such as a skid steer loader, an excavator, a backhoe loader, a wheel loader, a bulldozer, a telehandler, a motor grader, and/or another type of construction machine or vehicle. In some embodiments, the vehicle 10 includes one or more attached implements and/or trailed implements such as a front mounted mower, a rear mounted mower, a trailed mower, a tedder, a rake, a baler, a plough, a cultivator, a rotavator, a tiller, a harvester, and/or another type of attached implement or trailed implement.

According to an exemplary embodiment, the cab 30 is configured to provide seating for an operator (e.g., a driver, etc.) of the vehicle 10. In some embodiments, the cab 30 is configured to provide seating for one or more passengers of the vehicle 10. According to an exemplary embodiment, the operator interface 40 is configured to provide an operator with the ability to control one or more functions of and/or provide commands to the vehicle 10 and the components thereof (e.g., turn on, turn off, drive, turn, brake, engage various operating modes, raise/lower an implement, etc.). The operator interface 40 may include one or more displays and one or more input devices. The one or more displays may be or include a touchscreen, an LCD display, a LED display, a speedometer, gauges, warning lights, etc. The one or more input device may be or include a steering wheel, a joystick, buttons, switches, knobs, levers, an accelerator pedal, a brake pedal, etc.

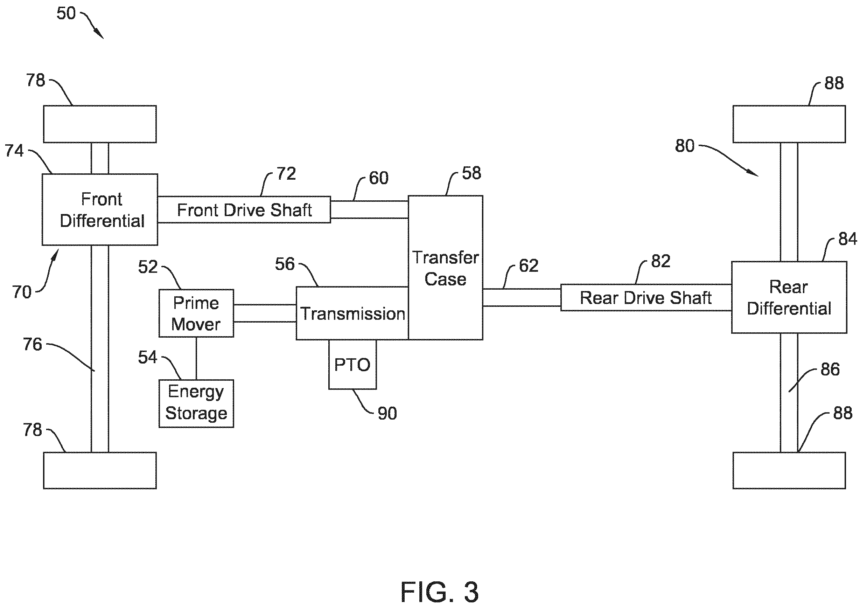

According to an exemplary embodiment, the driveline 50 is configured to propel the vehicle 10. As shown in FIG. 3, the driveline 50 includes a primary driver, shown as prime mover 52, and an energy storage device, shown as energy storage 54. In some embodiments, the driveline 50 is a conventional driveline whereby the prime mover 52 is an internal combustion engine and the energy storage 54 is a fuel tank. The internal combustion engine may be a spark-ignition internal combustion engine or a compression-ignition internal combustion engine that may use any suitable fuel type (e.g., diesel, ethanol, gasoline, natural gas, propane, etc.). In some embodiments, the driveline 50 is an electric driveline whereby the prime mover 52 is an electric motor and the energy storage 54 is a battery system. In some embodiments, the driveline 50 is a fuel cell electric driveline whereby the prime mover 52 is an electric motor and the energy storage 54 is a fuel cell (e.g., that stores hydrogen, that produces electricity from the hydrogen, etc.). In some embodiments, the driveline 50 is a hybrid driveline whereby (i) the prime mover 52 includes an internal combustion engine and an electric motor/generator and (ii) the energy storage 54 includes a fuel tank and/or a battery system.

As shown in FIG. 3, the driveline 50 includes a transmission device (e.g., a gearbox, a continuous variable transmission ("CVT"), etc.), shown as transmission 56, coupled to the prime mover 52; a power divider, shown as transfer case 58, coupled to the transmission 56; a first tractive assembly, shown as front tractive assembly 70, coupled to a first output of the transfer case 58, shown as front output 60; and a second tractive assembly, shown as rear tractive assembly 80, coupled to a second output of the transfer case 58, shown as rear output 62. According to an exemplary embodiment, the transmission 56 has a variety of configurations (e.g., gear ratios, etc.) and provides different output speeds relative to a mechanical input received thereby from the prime mover 52. In some embodiments (e.g., in electric driveline configurations, in hybrid driveline configurations, etc.), the driveline 50 does not include the transmission 56. In such embodiments, the prime mover 52 may be directly coupled to the transfer case 58. According to an exemplary embodiment, the transfer case 58 is configured to facilitate driving both the front tractive assembly 70 and the rear tractive assembly 80 with the prime mover 52 to facilitate front and rear drive (e.g., an all-wheel-drive vehicle, a four-wheel-drive vehicle, etc.). In some embodiments, the transfer case 58 facilitates selectively engaging rear drive only, front drive only, and both front and rear drive simultaneously. In some embodiments, the transmission 56 and/or the transfer case 58 facilitate selectively disengaging the front tractive assembly 70 and the rear tractive assembly 80 from the prime mover 52 (e.g., to permit free movement of the front tractive assembly 70 and the rear tractive assembly 80 in a neutral mode of operation). In some embodiments, the driveline 50 does not include the transfer case 58. In such embodiments, the prime mover 52 or the transmission 56 may directly drive the front tractive assembly 70 (i.e., a front-wheel-drive vehicle) or the rear tractive assembly 80 (i.e., a rear-wheel-drive vehicle).

As shown in FIGS. 1 and 3, the front tractive assembly 70 includes a first drive shaft, shown as front drive shaft 72, coupled to the front output 60 of the transfer case 58; a first differential, shown as front differential 74, coupled to the front drive shaft 72; a first axle, shown front axle 76, coupled to the front differential 74; and a first pair of tractive elements, shown as front tractive elements 78, coupled to the front axle 76. In some embodiments, the front tractive assembly 70 includes a plurality of front axles 76. In some embodiments, the front tractive assembly 70 does not include the front drive shaft 72 or the front differential 74 (e.g., a rear-wheel-drive vehicle). In some embodiments, the front drive shaft 72 is directly coupled to the transmission 56 (e.g., in a front-wheel-drive vehicle, in embodiments where the driveline 50 does not include the transfer case 58, etc.) or the prime mover 52 (e.g., in a front-wheel-drive vehicle, in embodiments where the driveline 50 does not include the transfer case 58 or the transmission 56, etc.). The front axle 76 may include one or more components.

As shown in FIGS. 1 and 3, the rear tractive assembly 80 includes a second drive shaft, shown as rear drive shaft 82, coupled to the rear output 62 of the transfer case 58; a second differential, shown as rear differential 84, coupled to the rear drive shaft 82; a second axle, shown rear axle 86, coupled to the rear differential 84; and a second pair of tractive elements, shown as rear tractive elements 88, coupled to the rear axle 86. In some embodiments, the rear tractive assembly 80 includes a plurality of rear axles 86. In some embodiments, the rear tractive assembly 80 does not include the rear drive shaft 82 or the rear differential 84 (e.g., a front-wheel-drive vehicle). In some embodiments, the rear drive shaft 82 is directly coupled to the transmission 56 (e.g., in a rear-wheel-drive vehicle, in embodiments where the driveline 50 does not include the transfer case 58, etc.) or the prime mover 52 (e.g., in a rear-wheel-drive vehicle, in embodiments where the driveline 50 does not include the transfer case 58 or the transmission 56, etc.). The rear axle 86 may include one or more components. According to the exemplary embodiment shown in FIG. 1, the front tractive elements 78 and the rear tractive elements 88 are structured as wheels. In other embodiments, the front tractive elements 78 and the rear tractive elements 88 are otherwise structured (e.g., tracks, etc.). In some embodiments, the front tractive elements 78 and the rear tractive elements 88 are both steerable. In other embodiments, only one of the front tractive elements 78 or the rear tractive elements 88 is steerable. In still other embodiments, both the front tractive elements 78 and the rear tractive elements 88 are fixed and not steerable.

In some embodiments, the driveline 50 includes a plurality of prime movers 52. By way of example, the driveline 50 may include a first prime mover 52 that drives the front tractive assembly 70 and a second prime mover 52 that drives the rear tractive assembly 80. By way of another example, the driveline 50 may include a first prime mover 52 that drives a first one of the front tractive elements 78, a second prime mover 52 that drives a second one of the front tractive elements 78, a third prime mover 52 that drives a first one of the rear tractive elements 88, and/or a fourth prime mover 52 that drives a second one of the rear tractive elements 88. By way of still another example, the driveline 50 may include a first prime mover that drives the front tractive assembly 70, a second prime mover 52 that drives a first one of the rear tractive elements 88, and a third prime mover 52 that drives a second one of the rear tractive elements 88. By way of yet another example, the driveline 50 may include a first prime mover that drives the rear tractive assembly 80, a second prime mover 52 that drives a first one of the front tractive elements 78, and a third prime mover 52 that drives a second one of the front tractive elements 78. In such embodiments, the driveline 50 may not include the transmission 56 or the transfer case 58.

As shown in FIG. 3, the driveline 50 includes a power-take-off ("PTO"), shown as PTO 90. While the PTO 90 is shown as being an output of the transmission 56, in other embodiments the PTO 90 may be an output of the prime mover 52, the transmission 56, and/or the transfer case 58. According to an exemplary embodiment, the PTO 90 is configured to facilitate driving an attached implement and/or a trailed implement of the vehicle 10. In some embodiments, the driveline 50 includes a PTO clutch positioned to selectively decouple the driveline 50 from the attached implement and/or the trailed implement of the vehicle 10 (e.g., so that the attached implement and/or the trailed implement is only operated when desired, etc.).

According to an exemplary embodiment, the braking system 100 includes one or more brakes (e.g., disc brakes, drum brakes, in-board brakes, axle brakes, etc.) positioned to facilitate selectively braking (i) one or more components of the driveline 50 and/or (ii) one or more components of a trailed implement. In some embodiments, the one or more brakes include (i) one or more front brakes positioned to facilitate braking one or more components of the front tractive assembly 70 and (ii) one or more rear brakes positioned to facilitate braking one or more components of the rear tractive assembly 80. In some embodiments, the one or more brakes include only the one or more front brakes. In some embodiments, the one or more brakes include only the one or more rear brakes. In some embodiments, the one or more front brakes include two front brakes, one positioned to facilitate braking each of the front tractive elements 78. In some embodiments, the one or more front brakes include at least one front brake positioned to facilitate braking the front axle 76. In some embodiments, the one or more rear brakes include two rear brakes, one positioned to facilitate braking each of the rear tractive elements 88. In some embodiments, the one or more rear brakes include at least one rear brake positioned to facilitate braking the rear axle 86. Accordingly, the braking system 100 may include one or more brakes to facilitate braking the front axle 76, the front tractive elements 78, the rear axle 86, and/or the rear tractive elements 88. In some embodiments, the one or more brakes additionally include one or more trailer brakes of a trailed implement attached to the vehicle 10. The trailer brakes are positioned to facilitate selectively braking one or more axles and/or one more tractive elements (e.g., wheels, etc.) of the trailed implement.

### Passive Implement Guidance System

According to various embodiments of the current disclosure, the methods, processes, devices, and systems disclosed herein relate to passive implement guidance systems. Passive implement guidance systems and active implement guidance systems both aim to provide guidance for agricultural implements but differ in operational method. Passive systems utilize external location signals, such as geospatial data transmitted by GNSS, to determine a towed implement's current ground position and a towing vehicle's ground position and offer feedback to the operator for manual adjustments to be made to the towing vehicle's ground position to maintain the towed implement's ground location along a desired course. In various embodiments of the current disclosure, passive systems for implement guidance may also determine operational instructions by a controller (e.g., including processing circuitry) of the vehicle to execute automatic adjustments to operating parameters of the vehicle to adjust the position of the towed implement. These systems do not actively control the implement's movement but rather provide trajectory adjustments to the towing vehicle to follow/execute to indirectly adjust the ground position of the towed implement.

On the other hand, active guidance systems incorporate actuators or mechanisms directly connected to the implement, enabling direct, and often automatic, adjustments of the implement's trajectory. These systems actively steer or adjust the implement's position based on real-time feedback from sensors and guidance algorithms, eliminating the need for constant manual intervention by the operator or dynamically adjusting the position/trajectory of the vehicle to adjust the position of the vehicle.

Traditional passive implement guidance systems rely on the use of two location sensors (e.g., one for the implement and one for the towing vehicle) to operate. However, according to various embodiments of the current disclosure, a single location sensor may be used to execute a passive implement guidance system, thus reducing costs and complexity for the operation and guidance of the implement.

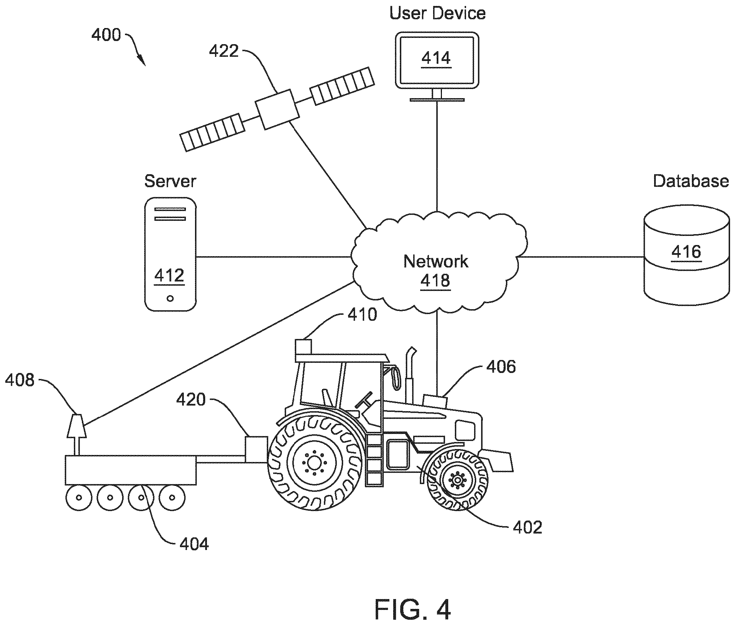

Turning now to FIG. 4, a passive implement guidance system 400 is shown. The passive implement guidance system 400 may include vehicle 402 (e.g., the vehicle 10 of FIG. 1), an implement 404, a network 418, a server 412, a user device 414, a database 416, a network 418, and a global location system 422. The vehicle 402 may be configured to physically couple to the implement 404 and tow the implement 404. The vehicle 402 may include a controller 406 that includes multiple systems and/or modules, as described herein. The vehicle 402 may also be equipped with one or more positional sensors 410, 420 and a vehicle control system (as described in FIG 4). The implement 404 of FIG. 4 may be equipped with a location sensor 408. The location sensor 408 may be a receiver (e.g., a GNSS receiver) and configured to receive location data (e.g., geospatial data) from the global location system 422 through the network 418 or directly from the global location system 422. The vehicle 402 may be equipped with the

Non-limiting examples of the network 418 may include private and public LAN, WLAN, MAN, WAN, satellite communication networks, and the Internet.

For ease of description and understanding, FIG. 4 depicts the passive implement guidance system 400 as having only one or a small number of each component. Embodiments may, however, comprise additional or alternative components, or omit certain components, from those of FIG. 4, and still fall within the scope of this disclosure. As an example, it may be common for embodiments to include multiple servers 412 and/or multiple databases 416. Embodiments may include or otherwise implement any number of devices capable of performing the various features and tasks described herein. For instance, FIG. 4 depicts the database 416 as hosted as a distinct computing device from the server 412, though, in some embodiments, the server 412 may include an integrated database 416 hosted by the server 412. Likewise, the controller 406, the server 412, the user device 414, and the global location system 422, are depicted as three distinct computing devices, however, the controller 406, the server 412, the user device 414, and the global location system 422 may also be integrated into one or more systems, devices, or servers. By way of example, the methods and functionality of the controller 406 may be executed by the server 412 in various embodiments.

The network 418 may include both wired and wireless communications according to one or more standards and/or via one or more transport mediums. The communication over the network 418 may be performed in accordance with various communication protocols such as Transmission Control Protocol and Internet Protocol (TCP/IP), User Datagram Protocol (UDP), and IEEE communication protocols. In one example, the network 418 may include wireless communications according to Bluetooth specification sets, or another standard or proprietary wireless communication protocol. In another example, the network 418 may also include communications over a cellular network, including, e.g., a GSM (Global System for Mobile Communications), CDMA (Code Division Multiple Access), and EDGE (Enhanced Data for Global Evolution) network.

The passive implement guidance system 400 is described in a context of computer-executable instructions, such as program modules, being executed by the controller 406 or other computer, such as the server 412. The program modules may include programs, objects, components, data structures, etc. that perform particular tasks or implement particular data types. The features of the passive implement guidance system 400 may be practiced either in a computing device or in a distributed computing environment, where the tasks are performed by processing devices, which may be linked through the network 418. In a distributed computing environment, program modules and/or systems may be located in both local and remote non-transitory, computer-readable computer storage media including memory storage devices.

The passive implement guidance system 400 may also operate in a local computing environment where the location and position data and application programs associated with the vehicle 402 and the implement 404 may be stored and executed on local or remote computing resources. The location and position data and application programs associated with the vehicle 402 and the implement 404 may be stored and executed on a remote cloud-based system server accessed over the network 418.

The server 412 may be any computing device comprising a processor and non-transitory machine-readable storage capable of executing the various tasks and processes described herein. Non-limiting examples of such computing devices may include workstation computers, laptop computers, server computers, laptop computers, and the like. While the passive implement guidance system 400 includes a single server 412, in some configurations, the server 412 may include any number of computing devices operating in a distributed computing environment to achieve the functionalities described herein. Furthermore, even though the database 416 is shown as a single remote database, in some configurations, the database 416 may be comprised of a single or multiple in-memory databases, cloud computing data storages, and/or data storages operationally controlled by a third party. The database 416 may be used to store various historical data (e.g., historical ground data, location data, historical travel paths) and/or modules and systems providing for computer functionality (e.g., the systems and modules described herein).

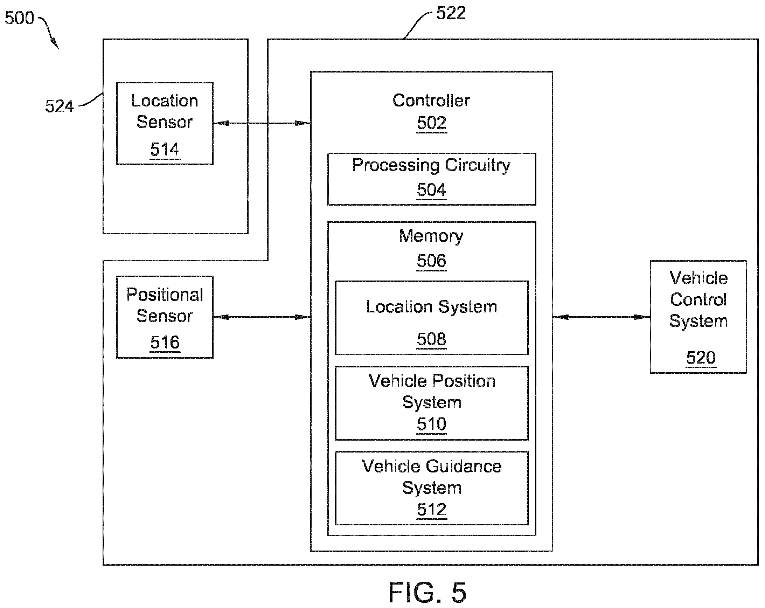

The controller 406 may be any computing device comprising processing circuitry and non-transitory machine-readable storage (e.g., memory) and capable of executing the various tasks and processes described herein. While the passive implement guidance system 400 includes a single controller 406, in some configurations, the controller 406 may include any number of computing devices operating in a distributed computing environment to achieve the functionalities described herein. The controller 406 may include various systems and modules for executing the functionalities described herein, as shown in FIG. 5. The user device 414 may be used to control various functionalities discussed herein through a user/operator interface. In addition, the user device 414 access the database 416 to read/write data.

Turning now to FIG. 5, a system 500 is shown. The system 500 may include a vehicle 522 and an implement 524. The vehicle 522 may include a controller 502, a positional sensor 516, and a vehicle control system 520. The vehicle 522 may be substantially similar to the vehicle 402 of FIG. 4 or the vehicle 10, and the controller 502 may be substantially similar to the controller 406 of FIG. 4.

Turning back to FIG. 5, according to some embodiments, the controller 502, through the processing circuitry 504, operates functionality of a vehicle 522. The controller 502 may be onboard the vehicle 522 in some embodiments. In other embodiments, the controller 502 may be remote to the vehicle 522 but communicatively coupled to one or more vehicle subsystems (e.g., a vehicle control system 520) responsible for implementation of operating parameter adjustments. The controller 502 may receive location data from the location sensor 514 (e.g., a location receiver) and positional data from a position sensor 516 (e.g., a positional receiver).

The operating parameters of the vehicle 522 may include, but not be limited to, at least one of steering angle, an engine speed, a transmission gear selection, a hydraulic pressure or flow rate, a traction control, a work mode, a brake force, clutch engagement, implement height, and implement lateral adjustment. In other embodiments, the operating parameters discussed herein (e.g., the operating parameters of the vehicle 522 or otherwise) may include operating parameters of the implement 524. Operating parameters of the implement 524 may include, but not be limited to, at least one of implement steering angle, an implement height, an implement engagement depth, spray amount, spray direction, power take-off engagement, and an implement lateral adjustment. It should be understood that any process describing an adjustment to one or more operating parameters may include any operating parameter described herein, whether of the vehicle 522 or the implement 524, regardless of any indication otherwise.

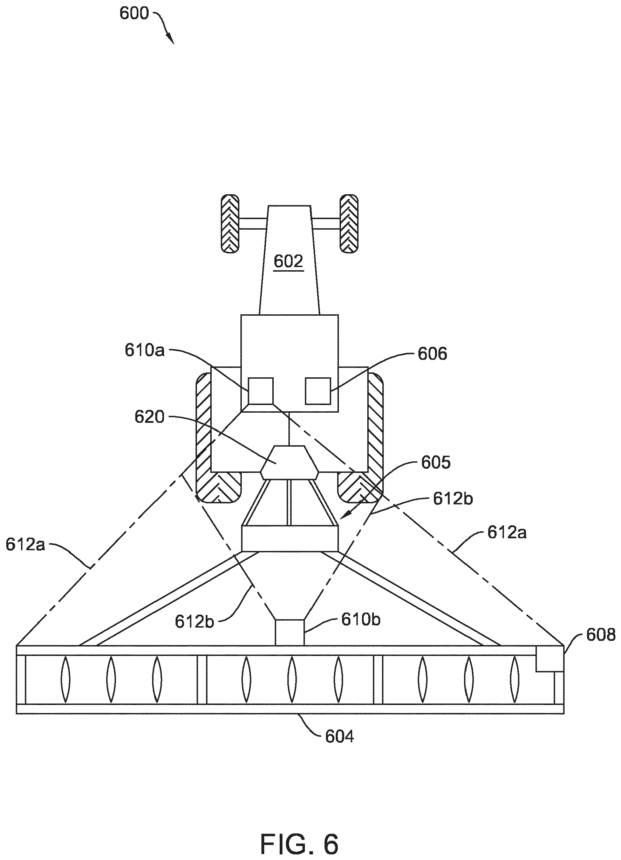

The controller 502 may be implemented as a general-purpose processor, an application specific integrated circuit ("ASIC"), one or more field programmable gate arrays ("FPGAs"), a digital-signal-processor ("DSP"), circuits containing one or more processing components, circuitry for supporting a microprocessor, a group of processing components, or other suitable electronic processing components. The processing circuit 504 may include an ASIC, one or more FPGAs, a DSP, circuits containing one or more processing components, circuitry for supporting a microprocessor, a group of processing components, or other suitable electronic processing components. In some embodiments, the processing circuit 504 is configured to execute computer code stored in the memory 506 to facilitate the activities, methods, and process described herein. The memory 506 may be any volatile or non-volatile computer-readable storage medium capable of storing data or computer code relating to the activities described herein. According to an exemplary embodiment, the memory 506 includes computer code modules (e.g., executable code, object code, source code, script code, machine code, etc.) configured for execution by the processing circuit 504. The functions and operations of the controller 502 are described in more detail herein with reference to FIGS. 6-9. Exemplary modules contained in the memory 506 of FIG. 5 include a location system 508, a vehicle position system 510, and a vehicle guidance system 512.

The location system 508 may include computer-readable instructions that instruct the processing circuitry 504 to perform various steps related to location determination. For example, when executing the location system 508, the processing circuitry 504 may receive location data from the location sensor 514. The processing circuitry 504 may analyze the received location data from the location sensor 514 to determine a real-world ground position of the implement 524 to which the location sensor 514 corresponds (e.g., the implement 524 to which the location sensor 514 is mounted). In some embodiments, the location sensor 514 may be physically coupled to the implement 524. The location sensor 514 may receive the location data through a network (e.g., the network 418 of FIG. 4) or other communication means from a Global Positioning System and/or a global navigation satellite system (e.g., the global location system 422). The location sensor 514 may receive and/or capture data related to signals transmitted by satellites in orbit such as GPS, GLONASS, Galileo, BeiDou, and others. The location sensor 514 may receive latitude and longitude coordinates corresponding to the ground location of the location sensor 514 and may receive conditional correction signals from various other sources, such as ground-based reference stations or satellite-based augmentation systems. These corrections compensate for errors introduced by factors such as atmospheric interference, satellite clock inaccuracies, and signal delays due to tropospheric conditions. In addition, the location sensor 514 may receive travel data such as velocity and direction of travel of the location sensor 514 (and by association, the implement 524). In some embodiments, the location data transmitted to the location sensor 514 has a velocity vector.

The location system 508 may receive this location data from the location sensor in the form of one or more data packets in recurring time intervals. The location system 508 interprets the received and incoming location data to determine a current ground position of the implement 524. In some embodiments, the location data is associated with the ground position of the implement 524 and the controller determines the real-world ground position of the implement 524 based at least on the location data associated with the ground position of the implement 524. In some embodiments, the location data received by the location sensor 514 includes the specific ground position of the location sensor 514. In some embodiments, the location system 508 adjusts the received location data corresponding to the location sensor 514 to account for the mounting location of the location sensor 514 on the implement 524. For example, in an embodiment in which the location sensor 514 is mounted at a location 5 feet left from the middle of the implement 524, the location system 508 may adjust the received ground location 5 feet to the right to determine the ground position of the middle of the implement 524. The location sensor 514 may continually (e.g., at recurring time intervals) receive new location data and the location system 508 may continually (e.g., at recurring time intervals) update the determined ground location of the implement based on the additional location data (e.g., the new location data).

The vehicle position system 510 may be configured to determine the ground position of the vehicle 522 towing the implement 524 based, at least in part, on the determined ground location of the implement 524. Because the vehicle 522 is physically coupled to the implement 524 by a physical connection, the vehicle position system 510 may estimate the ground position of the vehicle 522 based at least on the determined ground location of the implement 524 in conjunction with known reference data corresponding to the connection between the implement 524 and the vehicle 522. For example, the reference data may correspond to one or more characteristics of a coupling device (e.g., a positional coupling) utilized to couple the vehicle 522 to the implement 524. These characteristics may include a coupling device length, a rigidity or flexibility parameter of the coupling device, a wheelbase of the implement, a mounting position of the coupling device on the implement, a mounting position of the coupling device on the work vehicle, a coupling position of the coupling device on the implement, a coupling position of the coupling device on the work vehicle, a difference in height between the work vehicle and the implement, and a suspension parameter. And taking into account one or more of these characteristics, the vehicle position system 510may determine a position of the vehicle 522 relative to the implement 524. These characteristics may be used in conjunction with position data received by the position sensor 516 of the system 500 to determine the relative and ground position of the vehicle 522. The position sensor 516 may be one or more of a hitch position sensor, a load sensor, and/or an optical sensor.

In some embodiments, the position sensor 516 is a hitch position sensor. A hitch position sensor may measure a coupling angle between the implement 524 and the vehicle 522. In an example, if the implement 524 is being towed directly behind the vehicle 522 without being shifted laterally to either side, the tow angle may be 0°. However, if the implement 524 is shifted laterally, the tow angle may measure at, for example, 5°. Responsive to measuring a tow angle, the vehicle position system 510 may determine that there is a lateral shift of the implement 524 behind the vehicle 522. The amount of lateral shift may correspond, in part, on the tow angle. Various types of sensors may be used to measure the tow angle. For example, potentiometers, inclinometers, accelerometers, magnetic sensors, encoders, ultrasonic sensors, etc. Regardless of the type of sensor used, the position sensor 516 measures the relative position (e.g., a lateral shift) of the implement 524 with respect to the vehicle 522 by measuring the tow angle. In various embodiments, the tow angle is measured at the hitch of the vehicle 522.

In some embodiments, the position sensor 516 may be a load sensor. In some embodiments, the load cell measures a lateral load on the vehicle 522 at the hitch due to movement (e.g., lateral shift) of the implement 524. This load can be converted, by the vehicle position system 510, into a determined tow angle to determine how much the implement 524 is shifting behind the vehicle 522 (e.g., while traversing a grade or when making a turn).

Load sensors may be transducers that are used to convert force or weight into an electrical signal. Load sensors (e.g., the position sensor 516) may function by measuring the deformation, or strain, of a material when a force is applied to it. The position sensor 516 may be made of a metal, such as steel or aluminum, and may be coupled to a strain gauge.

The strain gauge is a thin metal wire or foil that is coupled (such as by an adhesive) to the surface of the position sensor 516 and is designed to change its resistance when the position sensor 516 is deformed (e.g., by tension or compression).

When a force is applied to the position sensor 516, the strain gauge experiences a change in resistance, which is proportional to the amount of deformation. This change in resistance is then converted into an electrical signal, which is typically in the form of a voltage or current.

The electrical signal from the position sensor 516 is then sent to the vehicle position system 510 to be processed by a signal conditioner (e.g., the vehicle position system 510), which amplifies the signal and applies any necessary calibration or adjustments. The signal may then be sent to a display or data acquisition system, where it can be recorded, analyzed, or used to control other equipment. In some embodiments, the position sensor 516 is removeably or fixedly coupled to the suspension of the vehicle 522.

The position sensor 516 may be an optical sensor configured to capture image data within a field of view and translate the captured image data into images for image analysis. For example, the position sensor 516 may be placed on the vehicle 522 in a way that the field of view of image capture is directed at the implement 524. The position sensor 516 may capture position data (e.g., image data) of the implement over recurring time periods and transmit the captured position data to the controller 502. The vehicle position system 510 of the controller 502 may receive the position data transmitted by the position sensor 516 and analyze the position data to make a determination as to the relative location of the vehicle 522 in relation to the implement 524.

By way of example, the vehicle position system 510 may use image processing to track the location of the implement 524 in relation to the vehicle 522. The image processing of the vehicle position system 510 may include distance tracking and location tracking of the implement. The vehicle position system 510 may be calibrated to individual implements and can make adjustments to the image analysis during image processing in accordance with the towed implement being used. In some embodiments, image fiducials may be affixed to the implement 524. These image fiducials may be used by the position sensor 516 to track the implement 524 during image capture, and the vehicle position system 510 may use data related to the image fiducials in determining movement distances and location of the implement 524. In some embodiments, the position sensor 516 is an ultrasonic, radar, or LIDAR sensor that tracks the location of the implement 524 relative to the vehicle 522.

In various embodiments, the vehicle 522 may be equipped with one or more position sensors 516. In addition, the vehicle 522 may be equipped with one or more different types of position sensor 516 (e.g., a hitch position sensor, a load sensor, and/or an optical sensor).

While the various embodiments described herein relate to tracking the location of the implement 524, it should be clearly understood that the positional sensor may, in like manner, be equipped onto the implement 524 and be used to track the location of the vehicle 522. In such embodiments, the captured position data is likewise transmitted to the vehicle position system 510 and the vehicle position system 510 analyzes the data to determine the location of the vehicle 522 in relation to the implement 524. In various embodiments, the positional sensor is mounted in a known position on the vehicle 522 or implement 524. This known position is used as a reference location when determining the location of the vehicle 522 in relation to the known ground position of the implement 524.

Once the vehicle position system 510 determines the relative position of the vehicle 522 with respect to the implement 524, the vehicle position system 510 determines the current ground position of the vehicle 522. To do so, the vehicle position system 510 translates the known, received ground position of the implement 524 by the relative position of the vehicle 522 in relation to the implement 524. For example, if the location system 508 determines that the implement 524 is located at the X, Y ground position coordinates (5,3) and the relative position of the vehicle 522 with respect to the implement 524 is (1,2), then the vehicle position system 510 may determine that the vehicle 522 is at the ground position of (6,5). The current ground position of the vehicle 522 is dynamically updated by the vehicle position system 510 as the relative position of the vehicle 522 with respect to implement 524 changes over time and the current ground position of the implement 524 changes over time.

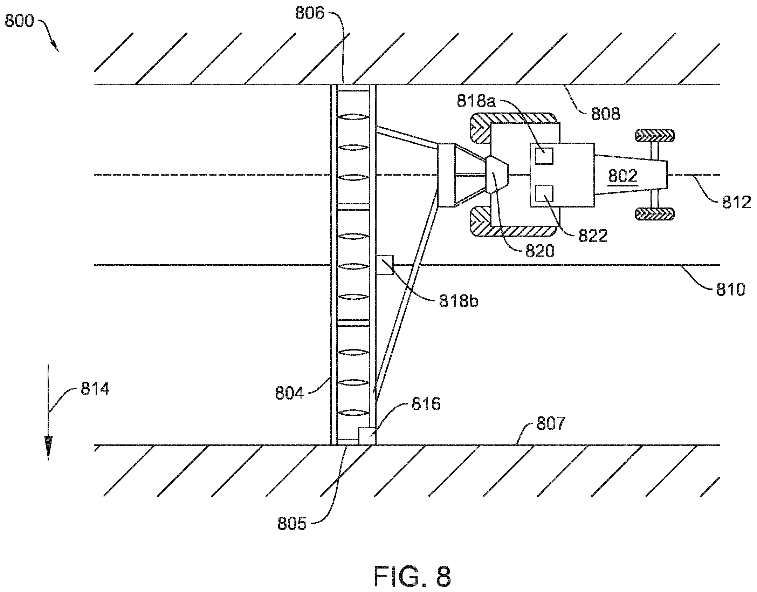

The vehicle guidance system 512 may generate a vehicle trajectory/path (e.g., a compensating vehicle trajectory 812 of FIG. 8) for the vehicle 522 of FIG 5. The vehicle guidance system 512 may also receive or generate an implement trajectory/path (e.g., an implement trajectory 810 of FIG. 8) upon which to operate the implement 524 of FIG 5. The implement trajectory/path may indicate a desired course along which to operate/tow the implement 524. The implement trajectory may relate to a harvesting path and may be optimized to reduce the time or distance of harvesting while maximizing crop harvest. The implement trajectory may be used by the vehicle guidance system 512 to determine the vehicle trajectory. Because the implement 524 is towed by the vehicle 522, the vehicle 522 is constrained to a ground position of the implement 524 and indirectly adjusts the ground position of the implement 524 as the vehicle 522 travels. As such, the determined ground position of the implement 524 and the received implement trajectory may influence the determination of the vehicle trajectory as determined by the vehicle guidance system 512. In addition to determining the vehicle trajectory, the vehicle guidance system 512 may also determine corresponding adjustments to make to one or more operating parameters of the vehicle 522 (or the implement 524) to effectuate operation along the determined vehicle trajectory.

In some embodiments, the vehicle trajectory may include guidance data associated with the direction of travel of the vehicle 522, the location of travel, the speed of travel, implement operation, obstacles, etc. The vehicle guidance system 512 may contain instructions to cause the processing circuitry 504 to read the guidance data in conjunction with the current ground position of the implement 524 and the implement trajectory to determine necessary adjustments to be made to one or more operating parameters of the vehicle 522 to maintain the vehicle's 522 operation along the determined vehicle trajectory at a determined speed and direction (if determined). In some embodiments, the vehicle guidance system 512 generates one or more navigation vectors (e.g., a direction and speed) and corresponding operating parameters to navigate the vehicle 522 automatically along the vehicle trajectory and thereby tow the implement 524 along the implement trajectory. The implement trajectory may be preloaded into the memory 506 of the controller 502 or may be transmitted by a remote server to the controller 502. In some embodiments, the implement trajectory is dynamically updated (or generated) by the vehicle guidance system 512 based on received positional data from the position sensor 516 and/or location data from the location sensor 514 such that the implement maintains an optimal harvesting route by minimizing distance needed to harvest. For example, the vehicle position system 510 may automatically update the implement trajectory/path during operation due to previous detours from the implement trajectory. By way of example, the vehicle 522 may operate such that the implement 524 detours from the predetermined implement trajectory (e.g., desired course) due to a hazard (e.g., a rock or animal). In a successive pass at the detour area, the vehicle position system 510 may automatically update the implement trajectory to follow the deviation at the previous detour.

In a nominal state (e.g., a default state in which the implement 524 follows directly behind the vehicle 522 with no lateral shift) the vehicle trajectory and the implement trajectory are substantially overlapping (e.g., as shown in FIG. 6). Thus, in response to the vehicle guidance system 512 of FIG. 5 receiving an indication that there is no relative, lateral shift of the implement 524 to the vehicle 522, the vehicle guidance system 512 determines that the vehicle trajectory coincides with the predetermined (or dynamically updated) implement trajectory. In other words, the vehicle guidance system 512 provides instructions for the vehicle to operate along the implement trajectory.

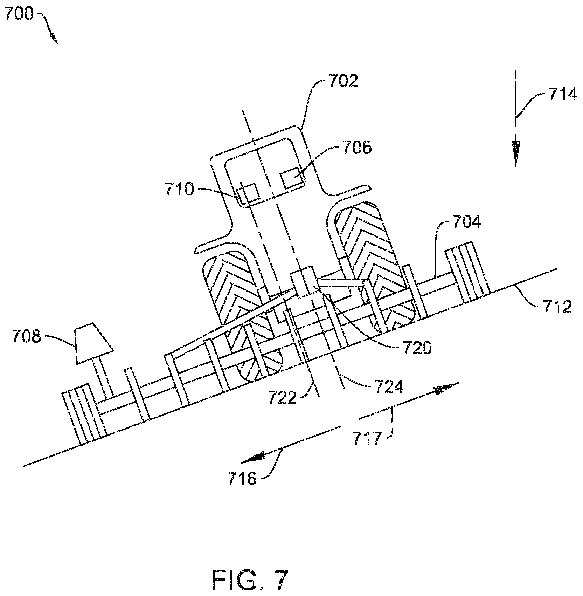

In response to the vehicle guidance system 512 receiving an indication from the vehicle position system 510 that there has been a lateral shift of the implement 524 with relation to the vehicle 522, the vehicle guidance system 512 generates an updated vehicle trajectory (e.g., a compensation trajectory) to compensate for the lateral shift of the implement and thereby maintain the implement operating along the implement trajectory. This is done, for example, by determining the actual ground position of the vehicle 522 based on the known, determined ground position of the implement and the relative location of the vehicle 522. FIGS. 7-8 illustrate various embodiments of an implement laterally shifted relative to a vehicle. The vehicle guidance system 512 then determines necessary operating parameters to adjust (and the corresponding adjustment amount) to operate the vehicle 522 along the updated vehicle trajectory (e.g., the compensation trajectory). The vehicle guidance system 512 transmits instructions to one or more vehicle 522 subsystems (e.g., the vehicle control system 520) to execute the adjustment to the operating parameters to the necessary operating parameter amounts. The vehicle subsystems (e.g., the vehicle control system 520) receive the instructions transmitted from the vehicle guidance system 512 and execute the instructions by adjusting the operating parameters of the vehicle 522 in accordance with the instructions.

In some embodiments, the vehicle guidance system 512 receives the location data of the implement 524 from the location sensor 514 to use in determining the vehicle trajectory. By way of example, the vehicle guidance system 512 may continually (e.g., at recurring intervals) compare the determined ground position of the implement 524 (as determined by the location system 508) with the implement trajectory. In response to determining, based on the comparison of the determined ground position of the implement 524 with the implement trajectory, that the implement has deviated from the desired course (e.g., the implement trajectory), the vehicle guidance system 512 updates the vehicle trajectory (based on the ground location of the implement 524 and the relative location of the vehicle 522) to tow the implement 524 back into line with the implement trajectory. According to various embodiments, the vehicle guidance system 512 takes into account the determined relative position of the vehicle 522 (as determined by the vehicle position system 510) when updating the vehicle trajectory (with corresponding adjustments to the operating parameters).

In determining adjustments to make to the operating parameters, the vehicle guidance system 512 implements one or more adjustment algorithms to determine adjustments needed to result in the implement operating along the implement trajectory. Various variables considered when making the determination of what adjustments to make to the one or more operating parameters include, but are not limited to, a weight distribution of the work vehicle and the implement, a wind speed, a terrain grade, a terrain type, an implement type, an amount of deviation of the implement from the desired course, a steering geometry of the work vehicle, a steering geometry of the implement, a speed of the work vehicle, a time of operation, crop characteristics, and one or more suspension characteristics of the implement and the work vehicle.

Turning now to FIG. 6, a vehicle-implement system 600 from a top-view perspective. The vehicle-implement system 600 may include a vehicle 602 and an implement 604. In some embodiments, the vehicle 602 is the vehicle 10 of FIG. 1. The implement 604 may be one of a plow, harrow, seeder, planter, cultivator, sprayer, fertilizer spreader, combine harvester, mower, brush hog, hay baler, rotary tiller, grain drill, irrigation applicator, grain cart, disc mower, manure spreader, forage harvester, potato harvester, cotton picker, vegetable transplanter, and strip tiller. The implement 604 may be coupled to the vehicle 602 by way of a coupling device 605. The coupling device 605 may be one a variety of devices for coupling the implement 604 to the vehicle 602. The coupling device 605 may be one of a drawbar, three-point hitch, quick hitch, tow-behind, pin hitch, and gooseneck connections. The coupling device 605 may include a power take-off device. The vehicle-implement system 600 may include a location sensor 608, a position sensor 610a, 610b, 620, and/or a controller 606 communicatively coupled to the location sensor 608 and the position sensor 610a, 610b, 620. The controller 606, the location sensor 608, and/or the position sensor 610a, 610b, 620 may be substantially similar to the controller 502, the position sensor 516, and/or the location sensor 514 of FIG. 5, respectively, and may perform some or all of the various functionalities described therein. Returning to FIG. 6, the position sensor 620 may be a hitch position sensor or load sensor, as described in FIG. 5. The position sensor 620 of FIG. 6 may be located at the vehicle 602, as shown in the FIG. 6, however, the position sensor 620 may also be equipped anywhere within the coupling device 605 and/or the implement 604. In the embodiment illustrated in FIG. 6, the implement 604 is in line with the vehicle 602. In such embodiments, the implement trajectory overlaps with the vehicle trajectory. In this embodiment, the position sensor 620 does not register a lateral shift of the implement 604 in relation to the vehicle 602. The position sensor 620 may be a hitch position sensor or a load sensor, as described in FIG. 5.

FIG. 6 illustrates two mounting positions for the position sensor 610a, 610b. The position sensor 610a is shown mounted on the vehicle 602 with a field of view 612a directed at the implement 604. In some embodiments, the position sensor 610a is configured to capture image data of the vehicle 602 and/or implement 604 and transmit the captured image data to the controller 606 for image analysis (e.g., by the vehicle position system 510, as described in FIG. 5). The position sensor 610b of FIG. 6 is shown mounted to the implement 604 with a field of view 612b directed toward the vehicle 602 and configured to capture images of the vehicle 602. The position sensor 610b transmits the captured image data of the vehicle 602 wired or wirelessly to the controller 606 for image analysis (e.g., by the vehicle position system 510, as described in FIG. 5). The location sensor 608 may be mounted on the implement 604 (as illustrated in the FIG. 6) and/or on the vehicle 602. In an exemplary embodiment, the vehicle-implement system 600 includes a single location sensor 608 mounted on the implement 604. However, it should be noted that the vehicle-implement system 600 may include more than one location sensor 608, and/or the location sensor 608 may be mounted on the vehicle 602.

Turning now to FIG. 7, a passive implement guidance system 700 is shown. The passive implement guidance system 700 may include a vehicle 702 and an implement 704. In the embodiment illustrated in FIG. 7, the vehicle 702 is traversing a slope 712 with the implement 704 in tow. In an embodiment, shown in FIG. 7, the implement 704 is shown laterally shifted to the left of the vehicle 702 due to the force of the gravitational force 714 acting on the implement 704 and causing the implement 704 to shift in a direction 716 down slope 712. The lateral shift is shown by the centerline 722 of the implement 704 being to the left of the centerline 724 of the vehicle 702. In a nominal state (e.g., when the implement 704 is not laterally shifted in relation to the vehicle 702, such as shown in FIG. 6) the centerline 722 in FIG. 7 and the centerline 724 are in line with one another. While the vehicle 702 and the implement 704 are shown in a laterally shifted position due to the force of the gravitational force 714 and traversing the slope 712, the implement 704 may result in a laterally shifted position due to other external factors. Several external factors include, a flat tire of the implement 704, excessive drag on the implement 704 (e.g., a plow) during operation, varying terrain composition, collision with obstacles, and/or turning events by the vehicle 702.

The vehicle 702 may include a controller 706 (e.g., the controller 502 or FIG. 5) and a position sensor 710, 720 (e.g., the position sensor 516 of FIG. 5) that is communicatively coupled to the controller 706 of FIG 7. The implement 704 may be equipped with a location sensor 708 that is communicatively coupled to the controller 706. In some embodiments, the passive implement guidance system 700 is substantially similar to the system 500 of FIG. 5, including in functionality and structure.

As described herein, the controller 706 of FIG. 7 may adjust (or transmit instructions to adjust) various operating parameters of the vehicle 702 and/or implement 704 to compensate for lateral shift of the implement 704 as measured by the position sensor 710, 720. In adjusting one or more operating parameters in accordance with the compensation trajectory generated by a vehicle guidance system of the controller 706, positional accuracy of the implement 704 along an implement trajectory is maintained. For example, as the implement 704 drifts down the slope 712 due to the gravitational force 714, the controller may determine that the implement 704 has traveled beyond a positional accuracy threshold (e.g., 1 foot left or right of the implement trajectory). In some embodiments, responsive to the controller 706 receiving an indication that a distance between the ground position of the implement 704 and the implement trajectory exceeds the positional accuracy threshold (e.g., the implement 704 is travelling outside the positional accuracy threshold), the controller 706 determines a new vehicle trajectory to automatically guide the vehicle 702 along such that the implement 704 is brought back within the positional accuracy threshold, thereby maintaining positionally accurate implement 704 operation in relation to the implement trajectory. For example, the controller 706 may adjust the vehicle trajectory in a direction 717 up the slope 712 to compensate for the lateral shift of the implement 704 in the direction 716 down the slope 712.

Turning now to FIG. 8, a top view of a passive implement guidance system 800 is shown. The passive implement guidance system 800 may include a vehicle 802 and an implement 804. In an embodiment, shown in FIG. 8, the implement 804 is shown laterally shifted to the right of the vehicle 802 due to the force of gravity acting on the implement 804 and causing the implement 804 to shift in the direction 814. In some embodiments, the shift in the direction 814 may be due to the vehicle 802 traversing a slope (e.g., as shown in FIG. 7). In other embodiments, the lateral shift is due to drag on the implement 804 or the vehicle 802. To maintain accurate implement 804 operation along an implement trajectory 810 (e.g., to maintain a far-left member 806 of the implement 804 in line with the border 808 and a far-right member 805 of the implement 804 in line with a border 807; or to maintain a central axis of the implement 804 in line with the implement trajectory 810), a controller 822 of the vehicle 802 updates a vehicle trajectory from being colinear with the implement trajectory 810 (as would be the case in which the implement 804 experienced no lateral shift with respect to the vehicle 802) to being offset, such as shown with a compensating vehicle trajectory 812. The passive implement guidance system 800 may utilize the functionalities, methods, and processes described herein to execute the passive implement guidance system 800.

In some embodiments, the controller 822 accesses historical data stored (either locally or remotely, such as at the database 416 of FIG. 4) of previous compensating vehicle trajectories over the same ground locations that the vehicle 802 of FIG. 8 is predicted to traverse. The controller 822 may predictively adjust a vehicle trajectory (with corresponding adjustments to the operating parameters) to preemptively make future adjustments based on the predicted future adjustment needed. In some embodiments, the controller 822 access a history of location data to use in predicting future adjustments. In such embodiments, the controller 822 preempts positionally inaccurate implement operation by adjusting operating parameters prior to receiving an indication of the implement ground location exceeding the positionally accurate threshold.

The vehicle 802 may additionally include some or all of a position sensor 818a, 818b, 820, and a location sensor 816. The position sensor 818a, 818b, 820, and a location sensor 816 may be substantially similar to corresponding components of the vehicle 522 of FIG. 5 (e.g., the location sensor 514 and the position sensor 516).

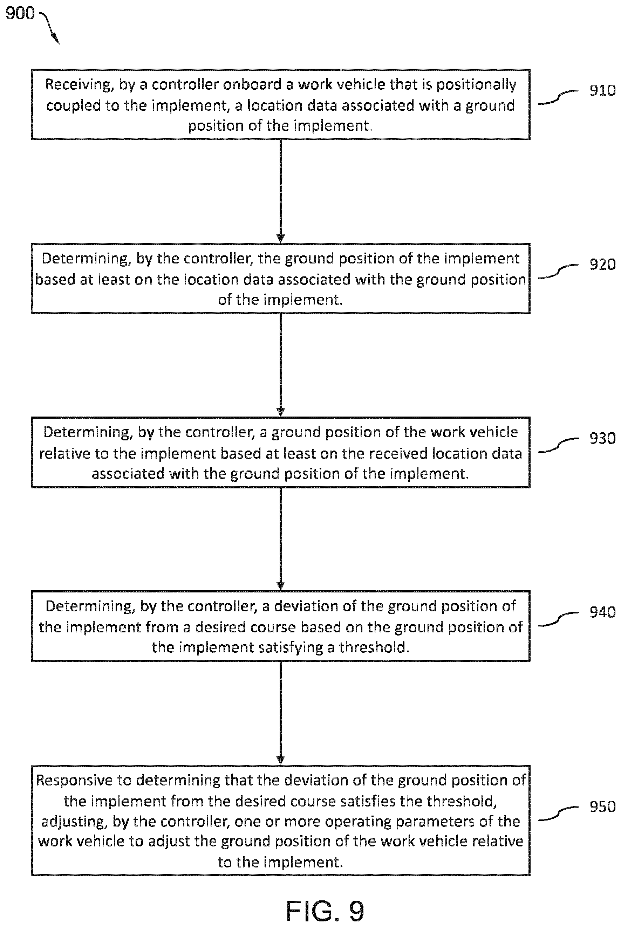

Turning now to FIG. 9, a flow chart of an example computer-implemented method 900 for passive implement guidance for maintaining positionally accurate implement operation of an implement. In various embodiments, the implement is towed by a vehicle (e.g., vehicle 10 of FIG. 1). In other embodiments, the implement is mounted to a front of the vehicle (e.g., a front-end mower).

At step 910, a controller onboard a work vehicle that is positionally coupled to the implement receives a location data associated with a ground position of the implement. As described herein, the location data may be geospatial data received from a GNSS or GPS system. The data may include longitudinal and latitude data or other worldwide geospatial coordinate information. In other embodiments, the location data may be local coordinates from a local location tracking system, such as an on-farm location tracking system.

At step 920, the controller determines the ground position of the implement based at least on the location data associated with the ground position of the implement. Upon receiving the location data, the controller may use various adjustments and relative position parameters to determine the ground location of the implement in a coordinate system in which an implement trajectory is saved. In some embodiments, the controller continuously (e.g., at regular intervals) receives location data and continuously (e.g., at regular intervals) determines the ground position of the implement. In some embodiments, the controller executes various filtering methods to the received location data to filter noise and micro-adjustments.

At step 930, the controller determines a ground position of the work vehicle relative to the implement based at least on the received location data associated with the ground position of the implement. In an embodiment, the controller uses known constraints between the work vehicle and the implement to calculate and determine a position of the work vehicle relative to the implement and then apply that relative location to the determined/known ground location of the implement. The controller may also use received positional data, as described herein, to determine the ground position of the vehicle. By offsetting the ground location of the implement by the relative location of the work vehicle in relation to the implement (as determined based on known parameters and received position data), the ground position of the work vehicle can be determined. This ground position may be considered an updated ground position.

At step 940, the controller determines a deviation of the ground position of the implement from a desired course based on the ground position of the implement exceeding a threshold. As the controller receives location data of the implement and determines the ground position of the implement, the controller also cross references the determined ground position of the implement against a predetermined or dynamically updated desired course (e.g., an implement trajectory). The desired course may have a threshold on either side of the desired course within which the implement may travel/operate and still remain positionally accurate. In response to the threshold being exceeded (e.g., the implement traveling outside the positionally accurate threshold), the controller determines that the implement has deviated from the desired course.

At step 950, responsive to determining that the deviation of the ground position of the implement from the desired course exceeds the threshold, the controller adjusts one or more operating parameters of the work vehicle to adjust the ground position of the work vehicle relative to the implement. Prior to adjusting the operating parameters of the work vehicle (or implement), the controller may, in some embodiments, update a vehicle trajectory upon which the controller automatically navigates the vehicle so that the implement maintains positionally accurate operation along the desired course (e.g., the implement trajectory). This updated vehicle trajectory (a compensation trajectory) may include shifting the vehicle trajectory in a direction opposite the deviation of the implement in a distance equal to the deviation of the implement to offset the deviation. In some embodiments, the adjustment of the vehicle trajectory is sufficient to maintain the implement within the positionally accurate threshold, while in other embodiments, the adjustment of the vehicle trajectory is sufficient to maintain the implement at the center between the positionally accurate thresholds on either side of the desired course. The controller may use the relative position of the vehicle to the implement to determine the actual geospatial coordinates of the compensation trajectory by offsetting the ground location of the implement with the relative location of the vehicle.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments and that such variations are intended to be encompassed by the present disclosure.

The hardware and data processing components used to implement the various processes, operations, illustrative logics, logical blocks, modules, and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure.

The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

The term "client or "server" include all kinds of apparatus, devices, and machines for processing data, including by way of example a programmable processor, a computer, a system on a chip, or multiple ones, or combinations, of the foregoing. The apparatus may include special purpose logic circuitry, e.g., a field programmable gate array (FPGA) or an application specific integrated circuit (ASIC). The apparatus may also include, in addition to hardware, code that creates an execution environment for the computer program in question (e.g., code that constitutes processor firmware, a protocol stack, a database management system, an operating system, a cross-platform runtime environment, a virtual machine, or a combination of one or more of them). The apparatus and execution environment may realize various different computing model infrastructures, such as web services, distributed computing and grid computing infrastructures.

The systems and methods of the present disclosure may be completed by any computer program. A computer program (also known as a program, software, software application, script, or code) may be written in any form of programming language, including compiled or interpreted languages, declarative or procedural languages, and it may be deployed in any form, including as a stand-alone program or as a module, component, subroutine, object, or other unit suitable for use in a computing environment. A computer program may, but need not, correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform actions by operating on input data and generating output. The processes and logic flows may also be performed by, and apparatus may also be implemented as, special purpose logic circuitry (e.g., an FPGA or an ASIC).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data (e.g., magnetic, magneto-optical disks, or optical disks). However, a computer need not have such devices. Moreover, a computer may be embedded in another device (e.g., a vehicle, a Global Positioning System (GPS) receiver, etc.). Devices suitable for storing computer program instructions and data include all forms of non-volatile memory, media and memory devices, including by way of example semiconductor memory devices (e.g., EPROM, EEPROM, and flash memory devices; magnetic disks, e.g., internal hard disks or removable disks; magneto-optical disks; and CD ROM and DVD-ROM disks). The processor and the memory may be supplemented by, or incorporated in, special purpose logic circuitry.

To provide for interaction with a user, implementations of the subject matter described in this specification may be implemented on a computer having a display device (e.g., a CRT (cathode ray tube), LCD (liquid crystal display), OLED (organic light emitting diode), TFT (thin-film transistor), or other flexible configuration, or any other monitor for displaying information to the user. Other kinds of devices may be used to provide for interaction with a user as well; for example, feedback provided to the user may be any form of sensory feedback (e.g., visual feedback, auditory feedback, or tactile feedback).

Implementations of the subject matter described in this disclosure may be implemented in a computing system that includes a back-end component (e.g., as a data server), or that includes a middleware component (e.g., an application server), or that includes a front end component (e.g., a client computer) having a graphical user interface or a web browser through which a user may interact with an implementation of the subject matter described in this disclosure, or any combination of one or more such back end, middleware, or front end components. The components of the system may be interconnected by any form or medium of digital data communication (e.g., a communication network). Examples of communication networks include a LAN and a WAN, an inter-network (e.g., the Internet), and peer-to-peer networks (e.g., ad hoc peer-to-peer networks).

It is important to note that the construction and arrangement of the vehicle 10 and the systems and components thereof (e.g., the driveline 50, the braking system 100, the control system 96, etc.) as shown in the various exemplary embodiments is illustrative only. Additionally, any element disclosed in one embodiment may be incorporated or utilized with any other embodiment disclosed herein.

## Claims

1. A method of maintaining positionally accurate implement operation of an implement, the method comprising:
receiving, by a controller onboard a work vehicle that is positionally coupled to the implement, a location data associated with a ground position of the implement;
determining, by the controller, the ground position of the implement based at least on the location data associated with the ground position of the implement;
determining, by the controller, a ground position of the work vehicle relative to the implement based at least on the received location data associated with the ground position of the implement;
determining, by the controller, a deviation of the ground position of the implement from a desired course based on the ground position of the implement exceeding a threshold; and
responsive to determining that the deviation of the ground position of the implement from the desired course exceeding the threshold, adjusting, by the controller, one or more operating parameters of the work vehicle to adjust the ground position of the work vehicle relative to the implement.

2. The method of claim 1, wherein the ground position of the work vehicle is further determined, by the controller, based on a characteristic of a positional coupling between the work vehicle and the implement, wherein the characteristic of the positional coupling includes at least one of a type of a coupling device, a length of the coupling device, a flexibility parameter of the coupling device, a wheelbase of the implement, a coupling position of the coupling device on the implement, a coupling position of the coupling device on the work vehicle, a difference in height between the work vehicle and the implement, and a suspension parameter.

3. The method of claim 1, further comprising:
receiving, by the controller, from an optical sensor positionally coupled to the implement, image data of the work vehicle; and
determining, by the controller, the ground position of the work vehicle based on the received location data associated with the ground position of the implement and the received image data of the work vehicle.

4. The method of claim 1, further comprising:
receiving, by the controller, from an optical sensor positionally coupled to the work vehicle, image data of the implement; and
determining, by the controller, the ground position of the work vehicle based on the received location data associated with the ground position of the implement and the received image data of the implement.

5. The method of claim 1, further comprising:
receiving, by the controller, from a position sensor, positional data of a coupling device physically coupled to the work vehicle at a first portion of the coupling device and physically coupled to the implement at a second portion of the coupling device; and
determining, by the controller, the ground position of the work vehicle based on the received location data associated with the ground position of the implement and the received positional data of the coupling device.

6. The method of claim 1, wherein adjustment of the one or more operating parameters is based in part on a weight distribution of the work vehicle and the implement, a wind speed, a terrain grade, a terrain type, an implement type, an amount of deviation of the implement from the desired course, a steering geometry of the work vehicle, a steering geometry of the implement, a speed of the work vehicle, a time of operation, crop characteristics, and one or more suspension characteristics of the implement and the work vehicle.

7. The method of claim 1, further comprising:
continuously updating, by the controller, the ground position of the implement as additional location data of the implement is received;
continuously updating, by the controller, the ground position of the work vehicle relative to the implement based on the additional location data of the implement;
determining, by the controller, the deviation of the implement from the desired course based on the updated ground position of the implement; and
dynamically adjusting, by the controller, the one or more operating parameters of the work vehicle until the deviation of the ground position of the implement is within the threshold.

8. The method of claim 1, wherein the location data is Global Navigation Satellite System ("GNSS") location data and is received from a GNSS receiver positionally coupled to the implement.

9. The method of claim 1, further comprising:
storing, by the controller, in a memory communicatively coupled to the controller, a history of the location data of the implement and corresponding adjustments made to the one or more operating parameters of the work vehicle;
accessing, by the controller, the history of the location data;
predicting, by the controller, future adjustments to the one or more operating parameters based on new location data received; and
responsive to predicting a future adjustment to the one or more operating parameters based on the new location data received, adjusting, by the controller, the one or more operating parameters based on the predicted future adjustment.

10. The method of claim 1, wherein the implement is towed by the work vehicle during operation.

11. The method of claim 1, wherein the work vehicle is physically coupled to the implement during operation.

12. The method of claim 1, wherein the work vehicle is communicatively coupled to the implement during operation.

13. The method of claim 1, wherein the one or more operating parameters include at least one of steering angle, an engine speed, a transmission gear selection, a hydraulic pressure or flow rate, a traction control, a work mode, a brake force, clutch engagement, implement height, and implement lateral adjustment.

14. The method of claim 1, wherein the one or more operating parameters of the work vehicle include one or more operating parameters of the implement, including at least one of an implement steering angle, an implement height, an implement engagement depth, and an implement lateral adjustment.

15. The method of claim 1, wherein the implement is at least one of plow, harrow, seeder, planter, cultivator, sprayer, fertilizer spreader, combine harvester, mower, brush hog, hay baler, rotary tiller, grain drill, irrigation applicator, grain cart, disc mower, manure spreader, forage harvester, potato harvester, cotton picker, vegetable transplanter, and strip tiller.

16. A system comprising,
a work vehicle;
an implement;
a positional receiver; and
a controller, the controller comprising one or more processors including one or more memory devices coupled to the one or more processors, the one or more memory devices configured to store instructions thereon that, when executed by the one or more processors, cause the one or more processors to:
receive location data associated with a ground position of the implement;
determine the ground position of the implement based at least on the location data associated with the ground position of the implement;
determine a ground position of the work vehicle relative to the implement based on the received location data and a characteristic of a positional coupling between the work vehicle and the implement;
determine a deviation of the ground position of the implement from a desired course based on the location data of the implement exceeds a threshold; and
responsive to determining that the deviation of the ground position of the implement from the desired course exceeds the threshold, adjusting one or more operating parameters of the work vehicle to adjust the ground position of the work vehicle relative to the implement.

17. The system of claim 16, wherein the one or more memory devices are configured to store further instructions thereon that, when executed by the one or more processors, cause the one or more processors to:
receive from an optical sensor positionally coupled to the implement, image data of the work vehicle; and
determine the ground position of the work vehicle based on the received location data associated with the ground position of the implement and the received image data of the work vehicle.

18. The system of claim 16, wherein the one or more memory devices are configured to store further instructions thereon that, when executed by the one or more processors, cause the one or more processors to:
receive from an optical sensor positionally coupled to the work vehicle, image data of the implement; and
determine the ground position of the work vehicle based on the received location data associated with the ground position of the implement and the received image data of the implement.

19. A work vehicle comprising,
a frame;
a front tractive assembly coupled to the frame, the front tractive assembly including a front axle;
a rear tractive assembly coupled to the frame, the rear tractive assembly including a rear axle;
a prime mover coupled to the frame and configured to drive one or more of the front tractive assembly and the rear tractive assembly to propel the vehicle; and
a controller, the controller comprising one or more processors including one or more memory devices coupled to the one or more processors, the one or more memory devices configured to store instructions thereon that, when executed by the one or more processors, cause the one or more processors to:
receive location data associated with a ground position of an implement positionally coupled to the work vehicle;
determine the ground position of the implement based at least on the location data associated with the ground position of the implement;
determine a ground position of the work vehicle relative to the implement based on the received location data and a characteristic of a positional coupling between the work vehicle and the implement;
determine a deviation of the ground position of the implement from a desired course based on the location data of the implement exceeds a threshold; and
responsive to determining that the deviation of the ground position of the implement from the desired course exceeds the threshold, adjusting one or more operating parameters of the work vehicle to adjust the ground position of the work vehicle relative to the implement.

20. The work vehicle of claim 19, wherein the one or more memory devices are configured to store further instructions thereon that, when executed by the one or more processors, cause the one or more processors to:
receive from an optical sensor positionally coupled to the work vehicle, image data of the implement; and
determine the ground position of the work vehicle based on the received location data associated with the ground position of the implement and the received image data of the implement.
